# EUROPÄISCHE PATENTSCHRIFT

(11) **EP 0 888 588 B1**
(45) Veröffentlichungstag und Bekanntmachung des Hinweises auf die Patenterteilung: **27.10.1999**
(21) Anmeldenummer: 97916332.6
(22) Anmeldetag: 06.03.1997
(51) Int. Cl.: G06F 13/40

(54) **BUSSEGMENT BEZIEHUNGSWEISE BUSANSCHALTUNG ZUM ANSCHLIESSEN EINER BAUGRUPPE EINER SPEICHERPROGRAMMIERBAREN STEUERUNG AN EINEN BUS**
BUS SEGMENT OR BUS INTERFACE FOR CONNECTION OF A SUBASSEMBLY OF A PROGRAMMABLE CONTROLLER TO A BUS
SEGMENT OU INTERFACE DE BUS POUR CONNECTER UN MODULE D'UNE COMMANDE PROGRAMMABLE A UN BUS

(30) Priorität: 18.03.1996 DE 19610556
(43) Veröffentlichungstag der Anmeldung: 07.01.1999
(73) Patentinhaber: SIEMENS AKTIENGESELLSCHAFT, 80333 München (DE)
(72) Erfinder: MAUL, Jürgen, D-92237 Sulzbach-Rosenberg (DE)
(86) Internationale Anmeldenummer: DE9700433
(87) Internationale Veröffentlichungsnummer: WO9735260

(56) Entgegenhaltungen:
- EP-A- 0 345 584
- EP-A- 0 632 393
- WO-A-93/15459

## Beschreibung

Die vorliegende Erfindung betrifft ein Bussegment nach dem Oberbegriff des Anspruchs 1 beziehungsweise eine Busanschaltung nach dem Oberbegriff des Anspruchs 2.

Aus der WO 93/15459 ist eine Busanschaltung mit den wesentlichen Merkmalen des Oberbegriffs des Anspruchs 2 bekannt.

Derartige Bussegmente beziehungsweise Busanschaltungen werden vielfach bei modular aufgebauten speicherprogrammierbaren Steuerungen verwendet. Beispielhaft werden die DE 36 03 750 Al und die DE 36 03 751 A1 genannt.

Bei einer derartigen modular aufgebauten speicherprogrammierbaren Steuerung kann es erforderlich sein, während des laufenden Betriebs Baugruppen zu stecken oder zu ziehen. Durch das Stecken bzw. Ziehen können jedoch Rückwirkungen auf den die Baugruppen miteinander verbindenden Bus eintreten, welche den Busverkehr stören. Um derartige Störungen zu vermeiden, ist im Stand der Technik üblicherweise vorgesehen, auf der Baugruppe vor- bzw. nacheilende Kontakte vorzusehen, welche mit einer Auswerteschaltung und einem veränderlichem Widerstand (typisch einem MOSFET) versehen ist, so daß die Baugruppe erst nach dem vollständigen Stecken elektrisch an den Bus angeschlossen wird bzw. bereits vor dem vollständigen Ziehen elektrisch vom Bus getrennt wird.

Diese Vorgehensweise ist insofern nachteilig, als zumindest die Auswerteschaltung von Anfang an mit Strom versorgt werden muß. Bereits das Anschließen der Auswerteschaltung an die Stromversorgung kann aber bereits Störungen der Spannungsversorgung des Busses hervorrufen, und zwar insbesondere dann, wenn ein Fehler in der Auswerteschaltung oder der Spannungsversorgung der Auswerteschaltung auftritt. Ein Kurzschluß beispielsweise der beiden Versorgungskontakte der Baugruppe, mittels derer die Auswerteschaltung mit Strom versorgt wird, würde zwangsläufig zu einem völligen Zusammenbruch der Stromversorgung des gesamten Busses führen. Die gleiche Folge würde sich ergeben, wenn aufgrund von anderen äußeren Einwirkungen auf dem Steckplatz für die Baugruppe die Versorgungskontakte des Steckplatzes miteinander kurzgeschlossen würden. Dieser Fall kann insbesondere dann auftreten, wenn eine zwar mechanisch in den Steckplatz einsteckbare Baugruppe, die aber elektrisch und funktional nicht für diesen Steckplatz bestimmt ist, in den Steckplatz eingesteckt wird.

Die Aufgabe der vorliegenden Erfindung besteht darin, ein Bussegment bzw. eine Busanschaltung zur Verfügung zu stellen, mittels derer negative Rückwirkungen auf den Bus unter allen Umständen vermieden werden.

Die Aufgabe wird durch die kennzeichnenden Merkmale der Ansprüche 1 bzw. 2 gelöst.

Mit einem Bussegment gemäß Anspruch 1 bzw. einer Busanschaltung gemäß Anspruch 2 ist insbesondere sichergestellt, daß eine eingesteckte Baugruppe erst dann mit Strom versorgt wird, wenn alle Kontakte, also auch die Signalkontakte, in den Steckplatz und dessen Kontakte eingesteckt sind und ferner die Baugruppe wieder vom Bus getrennt, wenn sie fehlerhaft arbeitet oder nicht für diesen Steckplatz bestimmt ist.

Durch die Maßnahme nach Anspruch 3 ergibt sich ein besonders weiches und damit störungsfreies Ankoppeln der Baugruppe an den Bus.

Weitere Vorteile und Einzelheiten ergeben sich aus der nachfolgenden Beschreibung eines Ausführungsbeispiels. Dabei zeigen:
- FIG 1: eine modulare speicherprogrammierbare Steuerung,
- FIG 2: den Anschluß einer Baugruppe der speicherprogrammierbaren Steuerung an den Bus,
- FIG 3: den Spannungsverlauf am Prüfkontakt,
- FIG 4: den Widerstandsverlauf des veränderlichen Widerstands und
- FIG 5: den Spannungsverlauf an einem der Versorgungskontakte.

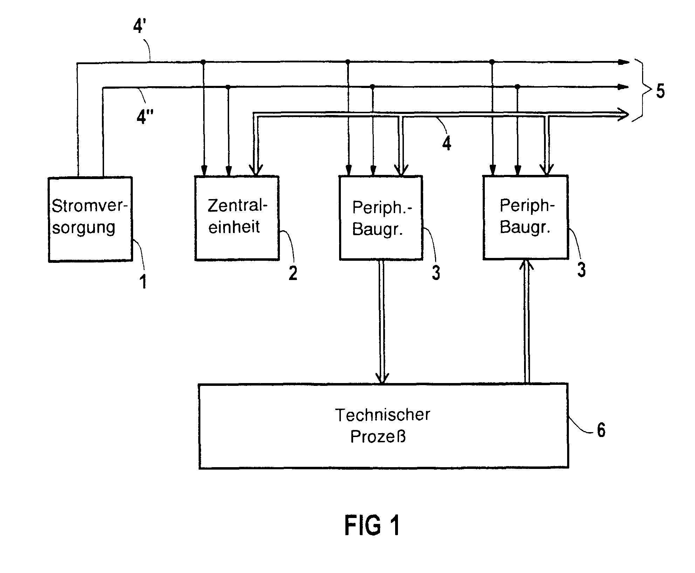

Gemäß FIG 1 besteht eine modulare speicherprogrammierbare Steuerung aus einer Stromversorgungsbaugruppe 1, einer Zentraleinheit 2 und Peripheriebaugruppen 3. Die Peripheriebaugruppen 3 können beispielsweise digitale oder analoge Eingabe- bzw. Ausgabebaugruppen sein. Ferner können die Peripheriebaugruppen 3 auch gemischte Ein-/Ausgabebaugruppen oder intelligente Funktionsmodule sein. Über die Peripheriebaugruppen 3 steuert und kontrolliert die Zentraleinheit 2 einen technischen Prozeß 6, z.B. eine Chemieanlage oder eine hydraulische Presse.

Die Zentraleinheit 2 und die Baugruppen 3 sind hierzu über den Steuerungsbus 4 datentechnisch miteinander verbunden. Die Zentraleinheit 2 und die Peripheriebaugruppen 3 werden ferner über die Versorgungsleitungen 4',4" mit elektrischer Energie versorgt. Über die Versorgungsleitung 4" wird eine gemeinsame Masseverbindung hergestellt, die Versorgungsleitung 4' führt üblicherweise ein Potential von + 5 Volt. Steuerungsbus 4 und Versorgungsleitungen 4',4" bilden zusammen den Rückwandbus 5 der speicherprogrammierbaren Steuerung.

Im obenstehenden Beispiel sind nur zwei Peripheriebaugruppen 3 dargestellt. Selbstverständlich könnte die speicherprogrammierbare Steuerung aber auch mehr Baugruppen aufweisen, z.B. 5,8,10... Ferner kann der Steuerungsbus 4 nach Bedarf ausgelegt sein. So kann der Steuerungsbus 4 beispielsweise ein serieller Bus sein, der lediglich eine Takt- und eine Datenleitung umfaßt. Der Steuerungsbus 4 könnte aber auch ein paralleler Bus sein, der eine Vielzahl von Adress-, Daten- und Steuerleitungen umfaßt. Der konkrete Aufbau des Steuerungsbusses 4 ist im Rahmen der vorliegenden Erfindung von untergeordneter Bedeutung. In jedem Fall aber bilden die Leitungen des Steuerungsbusses 4 die Signalleitungen der vorliegenden Erfindung.

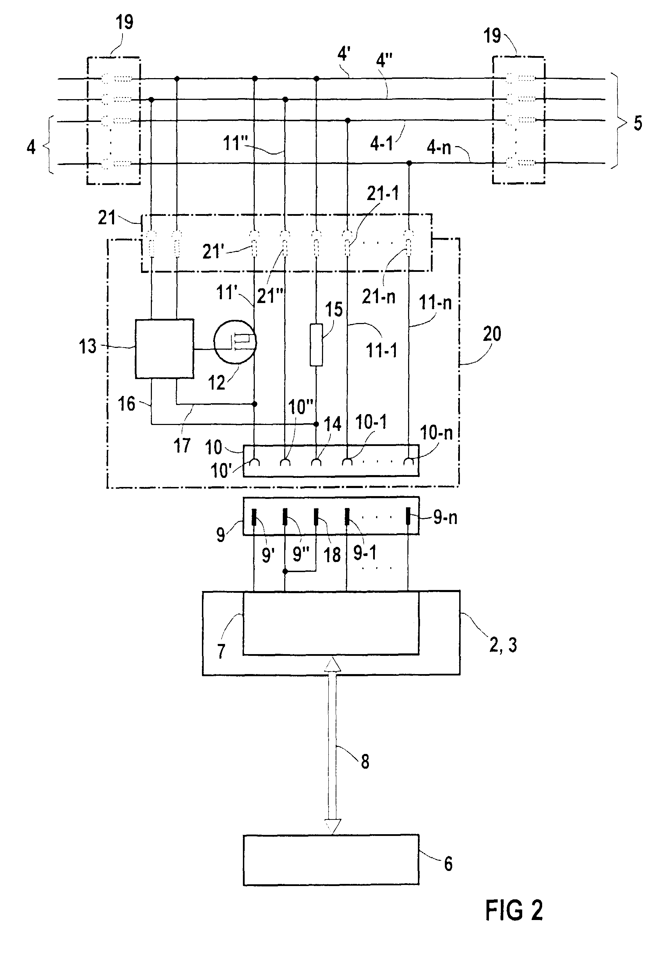

FIG 2 zeigt nun die Anschaltung der Zentraleinheit 2 bzw. der Peripheriebaugruppen 3 an ein Bussegment des Busses 5. Wie aus FIG 2 sofort ersichtlich ist, weist die an den Bus 5 angeschlossene Baugruppe 2,3 eine interne Schaltung 7 auf. Im Falle einer Peripheriebaugruppe ist diese ferner über die Prozeßleitungen 8 mit dem technischen Prozeß 6 verbunden. In jedem Fall aber ist die Baugruppe über den Steckanschluß 9 in einen Steckplatz 10 eingesteckt und so mit den Bus 5 verbunden.

Wie aus FIG 2 ferner sofort ersichtlich ist, erfolgt die datentechnische Ankopplung der Baugruppe 2,3 an den Bus 5 direkt über die Baugruppen-Signalkontakte 9-1 bis 9-n und die Steckplatz-Signalkontakte 10-1 bis 10-n, welche über die Signalstichleitungen 11-1 bis 11-n mit den Signalleitungen 4-1 bis 4-n des Steuerungsbusses 4 verbunden sind.

Die Stromversorgung der Baugruppe 2,3 hingegen erfolgt über die Baugruppen-Versorgungskontakte 9',9", welche in die Steckplatz-Versorgungskontakte 10',10" eingesteckt sind. Die Steckplatz-Versorgungskontakte 10',10" sind über die Versorgungsstichleitungen 11',11" mit den Versorgungsleitungen 4',4" verbunden. In der Versorgungsstichleitung 11' ist dabei ein MOSFET 12 angeordnet. Der Durchgangswiderstand des MOSFET 12 ist dabei bekanntermaßen innerhalb weiter Grenzen veränder- und einstellbar. Der MOSFET 12 stellt also den veränderlichen Widerstand der vorliegenden Erfindung dar.

Der MOSFET 12 wird von der Auswerteschaltung 13, die ebenfalls mit den Versorgungsleitungen 4',4" verbunden ist, entsprechend den Signalen, welche der Auswerteschaltung 13 zugeführt werden, hochohmig oder niederohmig gesteuert.

Wie weiterhin aus FIG 2 ersichtlich ist, weist der Steckplatz 10 einen Prüfkontakt 14 auf, der über den Pullwiderstand 15 mit der Versorgungsleitung 4' verbunden ist. Das am Prüfkontakt 14 anstehende Potential wird der Auswerteschaltung 13 über die Prüfkontaktleitung 16 zugeführt. Ferner wird der Auswerteschaltung 13 noch über die Versorgungskontaktleitung 17 das am Versorgungskontakt 10' anstehende Potential zugeführt.

Im wesentlichen beruht die vorliegende Erfindung darauf, daß am Prüfkontakt 14 aufgrund des Pullwiderstands 15 das Potential der Versorgungsleitung 4' ansteht, wenn die Baugruppe 2,3 nicht in den Steckplatz 10 eingesteckt ist. Ist die Baugruppe 2,3 hingegen in den Steckplatz 10 eingesteckt, ist der Prüfkontakt 14 über den Steckplatz-Versorgungskontakt 10", den Baugruppen-Versorgungskontakt 9" und den mit diesem direkt verbundenen Gegenprüfkontakt 18 direkt mit der Versorgungsleitung 4" verbunden, so daß in diesem Fall das andere Versorgungspotential an der Auswerteschaltung 13 ansteht.

Dadurch kann die Auswerteschaltung 13 das am Prüfkontakt 14 anstehende Potential auswerten und den veränderlichen Widerstand 12 niederohmig oder hochohmig steuern, je nachdem, ob die Baugruppe 2,3 in den Steckplatz 10 eingesteckt ist oder nicht. Weiterhin kann durch Auswerten des an der Versorgungskontaktleitung 17 anstehenden Potentials festgestellt werden, ob aufgrund des Steckens der Baugruppe 2,3 das Versorgungspotential zusammenbricht. In diesem Fall wird dann wieder der MOSFET 12 hochohmig gesteuert, so daß die Baugruppe 2,3 vom Bus 5 getrennt wird. Dadurch können die anderen an den Bus 5 angeschlossenen Baugruppen weiterhin betrieben werden.

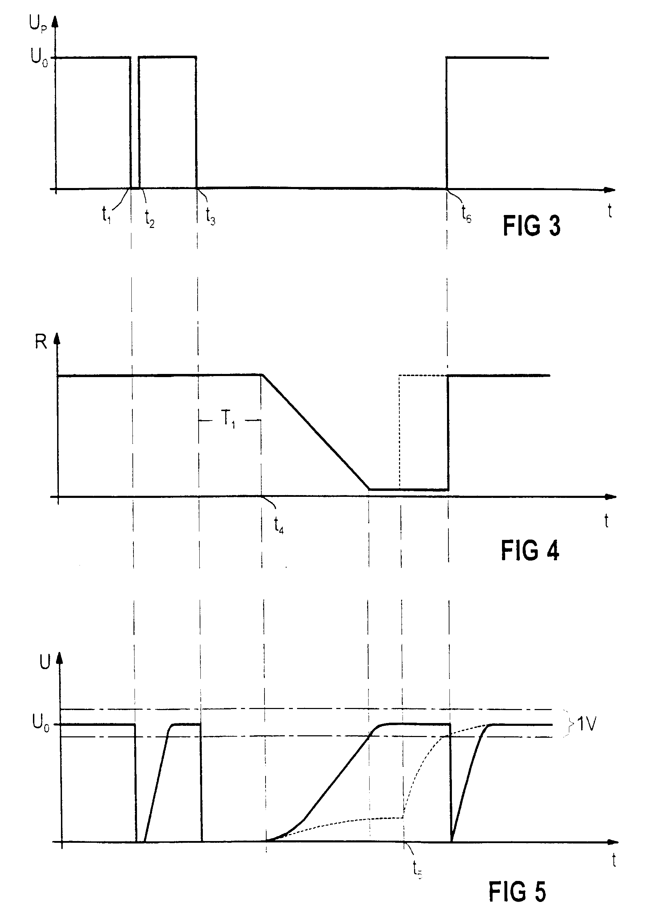

Die genaue Wirkungsweise der Auswerteschaltung 13 wird nunmehr nachfolgend mit Bezug auf die FIG 3 bis 5 erläutert.

Nach oben ist in FIG 3 die am Prüfkontakt anstehende Spannung Up, in FIG 4 der Widerstandswert R des MOSFET 12 und in FIG 5 die Spannung U des Versorgungskontakts 10' aufgetragen. Nach rechts ist jeweils die Zeit t aufgetragen.

Solange das der Auswerteschaltung 13 über die Prüfkontaktleitung 16 zugeführte Potential Uₚ des Prüfkontakts 14 gemäß FIG 3 der Versorgungsspannung U₀ von z.B. 5 Volt entspricht, wird der MOSFET 12 von der Auswerteschaltung 13 derart angesteuert, daß er, wie in FIG 4 dargestellt, hochohmig ist. Wenn zum Zeitpunkt t₁ das Potential kurzfristig auf 0 Volt absinkt und zum Zeitpunkt t₂ wieder auf 5 Volt ansteigt, bleibt der MOSFET 12 ebenfalls hochohmig, da der MOSFET erst dann niederohmig gesteuert wird, wenn das am Prüfkontakt 14 anstehende Potential Uₚ während einer vorher bestimmten Wartezeit T₁ ununterbrochen in etwa dem (Masse-)Potential der Versorgungsleitung 4" entspricht.

Ein derartiges kurzes Absinken der am Prüfkontakt 14 anstehenden Potentials Uₚ kann z.B. dadurch erfolgen, daß beim Stecken der Baugruppe 2,3 ein sogenanntes Prellen der Kontakte erfolgt.

Das zu diesem Zeitpunkt über die Versorgungskontaktleitung 17 übertragene Potential U bricht gemäß FIG 5 zwar ebenfalls zusammen, dies ist für die Ansteuerung des MOSFET 12 zu diesem Zeitpunkt jedoch irrelevant.

Zu einem späteren Zeitpunkt t₃ erfolgt das endgültige Einstecken der Baugruppe 2,3 in den Steckplatz 10. Dadurch wird das Laufen der Wartezeit T₁ ausgelöst. Nach Ablauf dieser Wartezeit T₁ wird der MOSFET 12, wie in FIG 4 dargestellt, allmählich niederohmig gesteuert. Dementsprechend sinkt der Widerstand des MOSFET 12 ab dem Zeitpunkt t₄, und die am Versorgungskontakt 10' anstehende Spannung U steigt an.

Zu einem Zeitpunkt t₅ prüft die Auswerteschaltung 13, ob das am Versorgungskontakt 10' anstehende Potential U in etwa dem Versorgungspotential U₀ der Versorgungsleitung 4' entspricht. Im vorliegenden Fall wird geprüft, ob das am Versorgungskontakt 10' anstehende Potential um maximal 0,5 Volt nach oben oder unten vom Soll-Potential U₀ = 5 Volt abweicht. Wenn das gemessene Potential U innerhalb dieses Wertebereichs liegt, bleibt der Widerstand 12 niederohmig. Er wird erst dann wieder (zum Zeitpunkt t₆) hochohmig, wenn das Prüfpotential Uₚ wieder auf das Versorgungspotential U₀ steigt.

Wenn dagegen, wie in den FIG 4 und 5 gestrichelt dargestellt, zum Zeitpunkt t₅ das am Versorgungskontakt 10' anstehende Potential U außerhalb des vorbestimmten Wertebereichs (im vorliegenden Fall z.B. außerhalb des Bereichs von 4,5 bis 5,5 Volt) liegt, wird dies als fehlerhafter Anschluß der Baugruppe 2,3 an den Bus 5 gewertet. Die Auswerteschaltung 13 steuert in diesem Fall den Widerstand 12 sofort wieder hochohmig (siehe gestrichelte Linie in FIG 4). In der Auswerteschaltung 13 wird in diesem Fall ein Merker gesetzt, der ein erneutes Niederohmigsteuern des MOSFET 12 verhindert, bis die Baugruppe 2,3 wieder aus dem Steckplatz 10 ausgezogen wird. Der Merker wird also erst zum Zeitpunkt t₆ zurückgesetzt.

Die Zeitspanne zwischen t₅ und t₄ ist die sogenannte Stabilisierungszeit T₂.

Gemäß der in FIG 2 dargestellten Schaltung sind der Steckplatz 10, die Auswerteschaltung 13, der MOSFET 12 und der Pullwiderstand 15 sowie die entsprechenden Leitungen Teil des Rückwandbusses 5. Genauer gesagt sind die Auswerteschaltung 13, der MOSFET 12 und der Widerstand 15 dem Bussegment zugeordnet, in dem der Steckplatz 10 angeordnet ist. Der Rückwandbus 5 weist dann mehrere derartige Schaltungen auf, nämlich pro Steckplatz 10 eine Schaltung.

Alternativ könnte auch der Rückwandbus 5 selbst modular aufgebaut sein, so daß er aus einzelnen, miteinander verbindbaren Bussegmenten besteht. Dies ist in FIG 2 dadurch angedeutet, daß gestrichelt gezeichnete Steckverbindungen 19 angedeutet sind.

Ebenso wäre es möglich, Auswerteschaltung 13, MOSFET 12 und Widerstand 15 nebst zugehöriger Verschaltung und Steckplatz 10 in einer eigenen Busanschaltung 20 anzuordnen, welche auf den Bus 5 aufsteckbar ist, so daß die Anschaltung zwischen Baugruppe 2,3 und Bus 5 angeordnet ist. Auch dies ist schematisch in FIG 2 dargestellt. In diesem Fall weist die Busanschaltung 20 außer dem Steckplatz 10 für die Baugruppe 2,3 auch noch einen Busanschluß 21 mit Kontakten 21',21",21-1 bis 21-n auf. Die Kontakte 21' und 10' sind dann wieder über die Verbindungsleitung 11' miteinander verbunden, analoges gilt für die Kontakte 21" und 10" sowie die Kontakte 21-1 und 10-1 bis 21-n und 10-n.

Unabhängig vom konkreten Aufbau bleibt die Funktionalität der Schaltung aber stets dieselbe.

## Patentansprüche

1. Bussegment zum Anschließen einer Baugruppe (2,3) einer speicherprogrammierbaren Steuerung an einen Bus (5),
- wobei das Bussegment zumindest eine erste und eine zweite Versorgungsleitung (4',4") und eine Signalleitung (4-1 bis 4-n) sowie einen Steckplatz (10) zum Einstecken der Baugruppe (2,3) aufweist,
- wobei der Steckplatz (10) zumindest einen ersten und einen zweiten Versorgungskontakt (10',10") und einen Signalkontakt (10-1 bis 10-n) aufweist,
- wobei die Leitungen (4',4",4-1 bis 4-n) des Bussegments über entsprechende Stichleitungen (11',11",11-1 bis 11-n) mit den korrespondierenden Kontakten (10',10",10-1 bis 10-n) des Steckplatzes (10) verbunden sind,
- wobei der Steckplatz (10) zusätzlich mindestens einen Prüfkontakt (14) aufweist, der über einen Pullwiderstand (15) mit der ersten Versorgungsleitung (4') verbunden ist, über die Baugruppe (2,3) mit der zweiten Versorgungsleitung (4") verbindbar ist und mit einer Auswerteschaltung (13) verbunden ist, und
- wobei die Auswerteschaltung (13) mit den Versorgungsleitungen (4',4") verbunden ist, das am Prüfkontakt (14) anstehende Potential (Uₚ) auswertet und einen in der ersten Versorgungsstichleitung (11') angeordneten veränderlichen Widerstand (12) hochohmig steuert, wenn das am Prüfkontakt (14) anstehende Potential (Uₚ) im wesentlichen dem Potential (U₀) der ersten Versorgungsleitung (4') entspricht,
**dadurch gekennzeichnet**,
- daß die Auswerteschaltung (13) den veränderlichen Widerstand (12) erst dann niederohmig steuert, wenn das am Prüfkontakt (14) anstehende Potential (Uₚ) während einer vorbestimmten Wartezeit (T₁) ununterbrochen im wesentlichen dem Potential der zweiten Versorgungsleitung (4") bzw. des zweiten Versorgungskontakts (21") des Busanschlusses (21) entspricht,
- daß die Auswerteschaltung (13) mit dem ersten Versorgungskontakt (10') des Steckplatzes (10) verbunden ist und daß die Auswerteschaltung (13) den veränderlichen Widerstand (12) wieder hochohmig steuert, wenn nach einer vorbestimmten Stabilisierungszeit (T₂) das Potential (U) des ersten Versorgungskontakts (10') des Steckplatzes (10) außerhalb eines vorbestimmten Wertebereiches liegt.

2. Busanschaltung zum Anschließen einer Baugruppe (2,3) einer speicherprogrammierbaren Steuerung an einen Bus (5),
- wobei die Busanschaltung (20) mindestens einen Busanschluß (21) an den Bus (5) und mindestens einen Steckplatz (10) zum Einstecken der Baugruppe (2,3) aufweist,
- wobei der Busanschluß (21) und der Steckplatz (10) je zumindest einen ersten und einen zweiten Versorgungskontakt (10',10",21',21") und einen Signalkontakt 10-1 bis 10-n, 21-1 bis 21-n) aufweisen,
- wobei korrespondierende Kontakte (10' und 21',10" und 21",10-1 und 21-1 bis 10-n und 21-n) von Busanschluß (21) und Steckplatz (10) über entsprechende Verbindungsleitungen (11',11",11-1 bis 11-n) miteinander verbunden sind,
- wobei der Steckplatz (10) zusätzlich mindestens einen Prüfkontakt (14) aufweist, der über einen Pullwiderstand (15) mit dem ersten Versorgungskontakt (21') des Busanschlusses (21) verbunden ist, über die Baugruppe (2,3) mit dem zweiten Versorgungskontakt (21") des Busanschlusses (21) verbindbar ist und mit einer Auswerteschaltung (13) verbunden ist, und
- wobei die Auswerteschaltung (13) mit den Versorgungskontakten (21',21") des Busanschlusses (21) verbunden ist, das am Prüfkontakt (14) anstehende Potential (Uₚ) auswertet und einen in der ersten Versorgungsverbindungsleitung (11') angeordneten veränderlichen Widerstand (12) hochohmig steuert, wenn das am Prüfkontakt (14) anstehende Potential (Uₚ) im wesentlichen dem Potential (U₀) des ersten Versorgungskontakts (21') des Busanschlusses (21) entspricht,
**dadurch gekennzeichnet**,
- daß die Auswerteschaltung (13) den veränderlichen Widerstand (12) erst dann niederohmig steuert, wenn das am Prüfkontakt (14) anstehende Potential (Uₚ) während einer vorbestimmten Wartezeit (T₁) ununterbrochen im wesentlichen dem Potential der zweiten Versorgungsleitung (4") bzw. des zweiten Versorgungskontakts (21") des Busanschlusses (21) entspricht, und
- daß die Auswerteschaltung (13) mit dem ersten Versorgungskontakt (10') des Steckplatzes (10) verbunden ist und daß die Auswerteschaltung (13) den veränderlichen Widerstand (12) wieder hochohmig steuert, wenn nach einer vorbestimmten Stabilisierungszeit (T2) das Potential (U) des ersten Versorgungskontakts (10') des Steckplatzes (10) außerhalb eines vorbestimmten Wertebereiches liegt.

3. Bussegment bzw. Busanschaltung nach Anspruch 1 oder 2, **dadurch gekennzeichnet**, d a ß die Auswerteschaltung (13) den veränderlichen Widerstand (12) allmählich niederohmig steuert.

## Claims

1. Bus segment for connecting an assembly (2, 3) of a programmable logic controller to a bus (5),
- the bus segment having at least a first and a second supply line (4', 4") and a signal line (4-1 to 4-n) as well as a plug-in location (10) for inserting the assembly (2, 3),
- the plug-in location (10) having at least a first and a second supply contact (10', 10") and a signal contact (10-1 to 10-n),
- the lines (4', 4", 4-1 to 4-n) of the bus segment being connected via corresponding spur lines (11', 11", 11-1 to 11-n) to the corresponding contacts (10', 10", 10-1 to 10-n) of the plug-in location (10),
- the plug-in location (10) additionally having at least one test contact (14), which is connected to the first supply line (4') via a pull-up resistor (15), can be connected to the second supply line (4") via the assembly (2, 3) and is connected to an evaluation circuit (13), and
- the evaluation circuit (13) being connected to the supply lines (4', 4"), evaluating the potential (Uₚ) present at the test contact (14) and controlling a variable resistor (12), which is arranged in the first supply spur line (11'), to have a high resistance if the potential (Uₚ) present at the test contact (14) essentially corresponds to the potential (U₀) of the first supply line (4'),
characterized
- in that the evaluation circuit (13) controls the variable resistor (12) to have a low resistance only when the potential (Uₚ) present at the test contact (14) essentially corresponds to the potential of the second supply line (4") and, respectively, of the second supply contact (21") of the bus connection (21) in an uninterrupted manner during a predetermined waiting time (T₁), and
- in that the evaluation circuit (13) is connected to the first supply contact (10') of the plug-in location (10), and in that the evaluation circuit (13) controls the variable resistor (12) to have a high resistance again if, after a predetermined stabilization time (T₂), the potential (U) of the first supply contact (10') of the plug-in location (10) lies outside a predetermined value range.

2. Bus access circuit for connecting an assembly (2, 3) of a programmable logic controller to a bus (5),
- the bus access circuit (20) having at least one bus connection (21) to the bus (5) and at least one plug-in location (10) for inserting the assembly (2, 3),
- the bus connection (21) and the plug-in location (10) each having at least a first and a second supply contact (10', 10", 21', 21") and a signal contact (10-1 to 10-n, 21-1 to 21-n),
- corresponding contacts (10' and 21', 10" and 21", 10-1 and 21-1 to 10-n and 21-n) of the bus connection (21) and the plug-in location (10) being connected to one another via corresponding connection lines (11', 11", 11-1 to 11-n),
- the plug-in location (10) additionally having at least one test contact (14), which is connected to the first supply contact (21') of the bus connection (21) via a pull-up resistor (15), can be connected to the second supply contact (21") of the bus connection (21) via the assembly (2, 3) and is connected to an evaluation circuit (13), and
- the evaluation circuit (13) being connected to the supply contacts (21', 21") of the bus connection (21), evaluating the potential (Uₚ) present at the test contact (14) and controlling a variable resistor (12), which is arranged in the first supply connection line (11'), to have a high resistance if the potential (Uₚ) present at the test contact (14) essentially corresponds to the potential (U₀) of the first supply contact (21') of the bus connection (21),
characterized
- in that the evaluation circuit (13) controls the variable resistor (12) to have a low resistance only when the potential (Uₚ) present at the test contact (14) essentially corresponds to the potential of the second supply line (4") and, respectively, of the second supply contact (21") of the bus connection (21) in an uninterrupted manner during a predetermined waiting time (T₁), and
- in that the evaluation circuit (13) is connected to the first supply contact (10') of the plug-in location (10), and in that the evaluation circuit (13) controls the variable resistor (12) to have a high resistance again if, after a predetermined stabilization time (T₂), the potential (U) of the first supply contact (10') of the plug-in location (10) lies outside a predetermined value range.

3. Bus segment and bus access circuit according to Claim 1 or 2, characterized in that the evaluation circuit (13) gradually controls the variable resistor (12) to have a low resistance.

## Revendications

1. Segment de bus pour raccorder un module (2, 3) d'un système à programme enregistré à un bus (5),
- le segment de bus comportant au moins une première ligne (4') d'alimentation et une deuxième ligne (4") d'alimentation et une ligne (4-1 à 4-n) de transmission de signaux, ainsi qu'un emplacement (10) d'enfichage pour enficher le module (2, 3),
- l'emplacement (10) d'enfichage comportant au moins un premier contact (10') d'alimentation et un deuxième contact (10") d'alimentation et un contact (10-1 à 10-n) de signaux,
- les lignes (4', 4", 4-1 à 4-n) du segment de bus étant reliées par l'intermédiaire de lignes (11', 11", 11-1 à 11-n) de dérivation correspondante au contact (10', 10", 10-1 à 10-n) correspondant de l'emplacement (10) d'enfichage,
- l'emplacement (10) d'enfichage comportant de plus au moins un contact (14) de contrôle qui est relié par l'intermédiaire d'une résistance (15) pull à la première ligne (4') d'alimentation, qui peut être reliée par l'intermédiaire du module (2, 3) à la deuxième ligne (4") d'alimentation et qui est reliée à un circuit (13) d'exploitation, et
- le circuit (13) d'exploitation étant relié aux lignes (4', 4") d'alimentation, exploitant le potentiel (Uₚ) s'appliquant au contact (14) de contrôle et commandant une résistance (12) variable, montée dans la première ligne (11') de dérivation d'alimentation, pour être à haute impédance si le potentiel (U_{P}) s'appliquant au contact (14) de contrôle correspond sensiblement au potentiel (U₀) de la première ligne (4') d'alimentation,
caractérisé en ce que
- le circuit (13) d'exploitation ne commande la résistance (12) variable pour la rendre à basse impédance que si le potentiel (U_{P}) s'appliquant au contact (14) de contrôle correspond pendant une durée (T₁) d'attente prédéterminée, de manière ininterrompue, sensiblement au potentiel de la deuxième ligne (4") d'alimentation ou du deuxième contact (21") d'alimentation de la borne (21) de bus,
- le circuit (13) d'exploitation est relié au premier contact (10') d'alimentation de l'emplacement (10) d'enfichage et le circuit (13) d'exploitation commande la résistance (12) variable à nouveau pour la rendre à haute impédance si, après une durée (T₂) de stabilisation prédéterminée, le potentiel (U) du premier contact (10') d'alimentation de l'emplacement (10) d'enfichage est à l'extérieur d'un domaine de valeur prédéterminée.

2. Interface de bus pour raccorder un module (2, 3) d'un système à programme enregistré à un bus (5),
- l'interface (20) de bus comportant au moins une borne (21) de bus pour le raccordement au bus (5) et au moins un emplacement (10) d'enfichage pour enficher le module (2, 3),
- le raccordement (21) de bus et l'emplacement (10) d'enfichage comportant chacun au moins un premier et un deuxième contact (10', 10", 21', 21") d'alimentation et un contact (10-1 à 10-n, 21-1 à 21-n) de transmission de signaux,
- des contacts (10' et 21', 10" et 21", 10-1 et 21-1 à 10-n et 21-n) correspondants du raccordement (21) de bus et de l'emplacement (10) d'enfichage étant reliés entre eux par l'intermédiaire de lignes (11', 11", 11-1 à 11-n) de liaisons correspondantes,
- l'emplacement (10) d'enfichage comportant en plus au moins un contact (14) de contrôle, qui est relié au premier contact (21') d'alimentation de l'interface (21) de bus par l'intermédiaire d'une résistance (15) pull, qui peut être reliée au deuxième contact (21") d'alimentation de l'interface (21) de bus par l'intermédiaire du module (2, 3) et qui est reliée à un circuit (13) d'exploitation, et
- le circuit (13) d'exploitation étant relié aux contacts (21', 21") d'alimentation de l'interface (21) de bus, exploitant le potentiel (U_{P}) s'appliquant au contact (14) de contrôle et commandant une résistance (12) variable, montée dans la première ligne (11') de liaison d'alimentation, pour la rendre à haute impédance si le potentiel (U_{P}) s'appliquant au contact (14) de contrôle correspond sensiblement au potentiel (U₀) du premier contact (21') d'alimentation de l'interface (21) de bus,
caractérisé en ce que,
- le circuit (13) d'exploitation ne commande la résistance (12) variable pour la rendre à basse impédance que si le potentiel (U_{P}) s'appliquant au contact (14) de contrôle correspond pendant une durée (T₁) d'attente prédéterminée, de manière ininterrompue, sensiblement au potentiel de la deuxième ligne (4") d'alimentation ou du deuxième contact (21") d'alimentation de l'interface (21) de bus, et
- le circuit (13) d'exploitation est relié au premier contact (10') d'alimentation de l'emplacement (10) d'enfichage et le circuit (13) d'exploitation commande la résistance (12) variable pour la rendre à nouveau à haute impédance si, après une durée (T₂) de stabilisation prédéterminée, le potentiel (U) du premier contact (10') d'alimentation de l'emplacement (10) d'enfichage est à l'extérieur d'un domaine de valeurs prédéterminé.

3. Segment de bus ou interface de bus suivant la revendication 1 ou 2, caractérisé en ce que le circuit (13) d'exploitation commande progressivement la résistance (12) variable pour la rendre à basse impédance.
